(19) Europäisches Patentamt
European Patent Office
Office européen des brevets

(11) **EP 2 513 457 B1**

(12) **EUROPÄISCHE PATENTSCHRIFT**

(45) Veröffentlichungstag und Bekanntmachung des Hinweises auf die Patenterteilung:
**11.09.2019 Patentblatt 2019/37**

(21) Anmeldenummer: **10803372.1**

(22) Anmeldetag: **17.12.2010**

(51) Int Cl.:
*F02D 41/00* (2006.01)   *F02D 41/14* (2006.01)
*F02D 41/24* (2006.01)   *F02D 21/08* (2006.01)

(86) Internationale Anmeldenummer:
**PCT/EP2010/007735**

(87) Internationale Veröffentlichungsnummer:
**WO 2011/082801 (14.07.2011 Gazette 2011/28)**

(54) **VERFAHREN ZUR ABGASRÜCKFÜHRUNG**

METHOD FOR EXHAUST GAS RECIRCULATION

PROCÉDÉ DE RECYCLAGE DES GAZ D'ÉCHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2009 DE 102009058713**

(43) Veröffentlichungstag der Anmeldung:
**24.10.2012 Patentblatt 2012/43**

(73) Patentinhaber: **DEUTZ Aktiengesellschaft 51149 Köln (DE)**

(72) Erfinder: **FRIESEN, Andreas 53773 Hennef (DE)**

(56) Entgegenhaltungen:
**WO-A1-2008/131789      DE-A1- 10 000 339
DE-A1-102008 008 618**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Zur Einhaltung der NOx-Emissionsgrenzwerte für aktuelle und zukünftige Emissionsstufen wird unter anderem das Verfahren der Abgasrückführung (AGR), bekannt u. a. aus Lexikon Motortechnik, Auflage 1, April 2004, S.14ff, aus der WO2008/131789A1 oder aus der DE 10000339 A1, bei dem ein realer und ein virtueller NOx-Sensor zum Einsatz kommen, eingesetzt. Das heißt, das Abgas des Motors wird durch ein dafür vorgesehenes System gekühlt und in definierten Mengen wieder dem Ansaugtrakt des Motors zugeführt. Die NOx-Emission lässt sich dadurch signifikant senken, wobei gleichzeitig die Partikel-Emissionen tendenziell steigen. Die niedrigen Grenzwerte für NOx- und Partikel-Emissionen zwingen die Motorenhersteller, ihre Motoren so abzustimmen, dass die vorgeschriebenen Grenzwerte nur sehr geringfügig unterschritten werden. Gleichzeitig muss sichergestellt werden, dass die alterungsbedingte Veränderung der Systemkomponenten und deren Serienstreuung nicht zur Überschreitung der Grenzwerte führt. Eine sinnvolle Vorgehensweise, die sich daraus ergibt, ist, die NOx-Emissionen auf den benötigten Wert mit Hilfe der AGR zu regeln. Für die Einregelung der NOx-Emissionen ist eine möglichst genaue Ermittlung der emittierten NOx erforderlich. Alle am Markt verfügbaren NOx-Sensoren für den Einsatz in Serienmotoren sind jedoch nur für die Messung bzw. Regelung der NOx-Emissionen im stationären Motorbetrieb geeignet und nicht für transiente Vorgänge. Der Grund dafür liegt in der relativ großen Tot- bzw. Verzögerungszeit, die diese Sensoren im Vergleich zu den Drehzahl- und Laständerungen im transienten Motorbetrieb haben. Als Totzeit (auch Laufzeit oder Transportzeit genannt) wird in der Regelungstechnik die Zeitspanne zwischen Änderung am Systemeingang und Antwort am Systemausgang einer Regelstrecke bezeichnet. Als Verzögerungszeit bezeichnet man z. B. die Filterkonstante eines PT1-Filters. Um diesem Problem Rechnung zu tragen, wird die NOx-Emission im transienten Betrieb mittels eines mathematischen Zusammenhangs aus verschiedenen Größen geschätzt. Da alle Bauteile und alle Messeinrichtungen dieses Systems Fehlertoleranzen und Alterungseffekten unterliegen, ist es erforderlich, die NOx-Schätzeinrichtung individuell für jeden Motor zur Laufzeit zu korrigieren. Die Korrektur findet während stationärer Betriebszustände mit Hilfe der über den NOx-Sensor stationär richtig gemessenen NOx-Werte statt, welche mit denen der Schätzeinrichtung verglichen werden. Stationäre Abweichungen zwischen Sensorwert und Schätzwert haben im transienten Motorbetrieb ebenfalls eine Abweichung der Emissionen in die gleiche Richtung zur Folge.

Die NOx-Schätzeinrichtung oder auch das physikalische Modell besteht aus Kennfeldern und Algorithmen, die es ermöglichen, aus aktuellen Messwerten (diverse Sensoren am Motor) -und den in den Kennfeldern abgebildeten Referenzwerten auch während des transienten Motorbetriebs auf die tatsächliche NOx-Emission zu schließen. Somit ist die NOx-Regelung auch während instationärer Vorgänge möglich.

Ist der Betriebszustand des Motors nahezu stationär, wird der Wert der Schätzeinrichtung mit dem des NOx-Sensors verglichen. Bei einer Abweichung werden die Referenzwerte der Schätzeinrichtung korrigiert, sodass die gewünschten NOx-Emissionen exakt im Rahmen der Messgenauigkeit des NOx-Sensors eingehalten werden. Dieser Korrekturwert muss nun für diesen Betriebspunkt gespeichert werden, um auch im transienten Motorbetrieb, in dem der NOx-Sensor wiederum keine zuverlässigen Werte liefert, korrigierend zu wirken.

Diese betriebspunktabhängige Speicherung des Korrekturwertes als Kennfeld wird mit der nachfolgend beschriebenen Methode durchgeführt. Durch die Korrektur dieser Art wird der alterungsbedingten NOx-Emissionsänderung und einer zu breiten Serienstreuung effektiv entgegengewirkt.

In technischen Anwendungen werden betriebspunktabhängige Zustände bzw. Werte oft in Abhängigkeit von einer bzw. mehreren Variablen bestimmt. Eine Methode, solch einen Zusammenhang mathematisch zu beschreiben und zu speichern, ist ein Kennfeld mit je einer Achse für die Abhängigkeit von den Eingangsvariablen und einer Matrix für die Ausgangsvariable. In prozessorgestützten Echtzeitanwendungen besitzen die Achsen eine vordefinierte Anzahl Stützstellen für die jeweilige Eingangsvariable. Die Werte der Stützstellen müssen dabei streng monoton sein. Die Dimension $n * m$ der Ausgangsmatrix wird durch die Anzahl $n$ der Stützstellen der Achse i und der Anzahl $m$ der Stützstellen der Achse y festgelegt. So kann jedem Wertepaar aus x-Stützstellenwert und y-Stützstellenwert eindeutig ein Element aus der Ausgangsmatrix zugewiesen werden. Die Paarungen der x- und y-Eingangswerte werden als Betriebspunkt bezeichnet. Die Parametrierung solcher Kennfelder erfolgt in der Regel durch Messungen am Prüfstand, im Labor oder auch mit berechneten Werten. Dabei werden die Betriebspunkte so gewählt, dass die einzelnen Stützstellenwerte durch die Eingangsvariablen exakt erreicht werden und somit nur ein Element der Ausgangsmatrix wertbestimmend ist. Im in Abbildung 4 dargestellten Beispiel hat die Eingangsvariable x den Wert "90" und die Eingangsvariable y den Wert "400". Das damit wertbestimmende Element der Ausgangsmatrix hat den Wert "5", wie in Abbildung 4 dargestellt.

Haben nun die eingangsvariablen Werte, die sich nicht genau mit den Werten der Stützstellen decken, sondern dazwischen liegen (z. B. x = 80,2 und y = 1787), muss der dazugehörige Ausgangswert (z = 7,103) durch lineare Interpolation ermittelt werden. Der gesuchte Wert errechnet sich aus den vier Werten der Ausgangsmatrix, die den Betriebspunkt umschließen, wie in Abbildung 5 dargestellt. D. h. die Gewichtung der vier einzelnen Werte ist abhängig von der jeweiligen Entfernung zum Betriebspunkt.

Die Flächenelemente stellen die Bereiche dar, die durch die lineare Interpolation entstehen. Die Kreuzungen der Linien untereinander und die Kreuzungen der Linien mit den Achsen hingegen zeigen die einzelnen Elemente der Ausgangsmatrix.

Die Problematik bei der Speicherung des Korrekturwertes für den von der Schätzeinrichtung verwendeten Referenzwertes besteht nun darin, dass der ermittelte Wert des Fehlers nicht direkt einem Element der Ausgangsmatrix zugeordnet werden kann, da die Eingangsvariablen in der Regel nicht genau auf einem Stützstellenwert liegen. Gesucht sind also sinnvolle Werte für diejenigen Elemente der Ausgangsmatrix, die den aktuellen Betriebspunkt umschließen. Für einen Betriebspunkt mit dem entsprechenden Ausgangswert sind theoretisch unendlich viele Wertekombinationen für die einzelnen Elemente zu finden, die bei einer linearen Interpolation den Ausgangswert darstellen. Die Problemstellung konzentriert sich also zunächst darauf, die Wertekombination zu finden, welche auch für die anderen Betriebspunkte innerhalb derselben Elemente der Ausgangsmatrix eine optimale Approximation des jeweiligen Korrekturwertes darstellen.

Die Bestimmung der Werte der betroffenen Elemente kann nur in Ausnahmefällen direkt im ersten Schritt ohne weiteren Korrekturbedarf erfolgen. In der Regel müssen die vorher bestimmten Werte bei einer Betriebspunktverschiebung erneut korrigiert werden, damit der neue Wert ebenfalls exakt abgebildet wird.

Dabei wird die Veränderung der Werte der Elemente der Ausgangsmatrix so umgesetzt, dass das Element mit der größten Gewichtung für den jeweiligen Betriebspunkt auch die größte Veränderung erfährt. Das Element mit der kleinsten Gewichtung erfährt analog dazu auch die kleinste Veränderung. Die neuen Werte für die Ausgangsmatrixelemente werden also nicht nur in Abhängigkeit des neuen Wertes bestimmt, sondern auch in Abhängigkeit von der Vergangenheit. Damit erlernt das Kennfeld die benötigte Korrektur der Schätzeinrichtung unter Berücksichtigung aller vorherigen Situationen.

Die nachfolgenden Gleichungen beschreiben den Lernzusammenhang mathematisch.

Mathematische Beschreibung der Adaption

Identifikation der Ausgangsmatrixelemente

Bei den folgenden Ausführungen wird vorausgesetzt, dass $a$, $b$, $c$ und $d$ bzw. $\grave{a}$, $\grave{b}$, $\grave{c}$ und $\grave{d}$ diejenigen Ausgangsmatrixelemente sind, die den aktuellen Betriebspunkt umschließen. Jedes Element der Ausgangsmatrix kann Einfluss auf den Ausgangswert haben. Dasselbe Element kann entweder gar nicht beteiligt sein, da es den betroffenen Betriebspunkt nicht unmittelbar umschließt oder auch als a, b, c oder d an der Interpolation beteiligt sein. Es ist also zwingend eine eindeutige Identifikation des Elements als a, b, c oder d je nach Betriebspunkt erforderlich, damit der richtige Wert in dem entsprechenden Element gespeichert werden kann. Diese Identifikation der Elemente kann durch den Vergleich des Zeilen- und Spaltenindex der Elemente erfolgen. Zur Interpolation werden die entsprechenden Elemente mit ihrem Gewichtsfaktor ohnehin identifiziert. Es ist also bekannt welche Elemente an der Interpolation teilnehmen. Für das im Anschluss beschriebene Verfahren ist noch zu untersuchen, ob ein Element als a, b, c oder d beteiligt ist.

Betrachtet wird dabei das Element $a_{j,k}$:

Fall 1: Neben $a_{j,k}$ sind in Abbildung 4 auch die Elemente $a_{j,k+1}$, $a_{j+1,k}$ und $a_{j+1,k+1}$, an der Interpolation beteiligt → $a_{j,k}$ = a

Abbildung 4: Schematische Darstellung Fall 1

| y\x | 20 | 50 | 60 | 70 | 90 | 100 | 150 |
|---|---|---|---|---|---|---|---|
| 100 | 2 | 5 | 2 | 5 | 2 | 5 | 20 |
| 200 | 3 | 6 | 3 | 6 | 3 | 6 | 30 |
| 300 | 4 | 7 | 4 | 7 | 4 | 7 | 40 |
| 400 | 5 | 8 | 5 | 8 | $a_{j,k}$=5 | 8 | 50 |
| 500 | 6 | 9 | 6 | 9 | 6 | 9 | 60 |
| 800 | 7 | 10 | 7 | 10 | 7 | 10 | 70 |
| 1500 | 8 | 5 | 8 | 5 | 8 | 5 | 80 |
| 2000 | 9 | 4 | 9 | 4 | 9 | 4 | 90 |
| 3000 | 10 | 3 | 10 | 3 | 10 | 3 | 100 |

Fall 2: Neben $a_{j,k}$ sind in Abbildung 5 auch die Elemente $a_{j,k-1}$, $a_{j+1,k}$ und $a_{j+1,k-1}$ an der Interpolation beteiligt → $a_{j,k}$ = b

Abbildung 5: Schematische Darstellung Fall 2

| y\x | 20 | 50 | 60 | 70 | 90 | 100 | 150 |
|---|---|---|---|---|---|---|---|
| 100 | 2 | 5 | 2 | 5 | 2 | 5 | 20 |
| 200 | 3 | 6 | 3 | 6 | 3 | 6 | 30 |
| 300 | 4 | 7 | 4 | 7 | 4 | 7 | 40 |
| 400 | 5 | 8 | 5 | 8 | $a_{j,k}=5$ | 8 | 50 |
| 500 | 6 | 9 | 6 | 9 | 6 | 9 | 60 |
| 800 | 7 | 10 | 7 | 10 | 7 | 10 | 70 |
| 1500 | 8 | 5 | 8 | 5 | 8 | 5 | 80 |
| 2000 | 9 | 4 | 9 | 4 | 9 | 4 | 90 |
| 3000 | 10 | 3 | 10 | 3 | 10 | 3 | 100 |

Fall 3: Neben $a_{j,k}$ sind in Abbildung 6 auch die Elemente $a_{j-1,k}$, $a_{j-1,k+1}$ und $a_{j,k+1}$ an der Interpolation beteiligt → $a_{j,k}= c$

Abbildung 6: Schematische Darstellung Fall 3

| y\x | 20 | 50 | 60 | 70 | 90 | 100 | 150 |
|---|---|---|---|---|---|---|---|
| 100 | 2 | 5 | 2 | 5 | 2 | 5 | 20 |
| 200 | 3 | 6 | 3 | 6 | 3 | 6 | 30 |
| 300 | 4 | 7 | 4 | 7 | 4 | 7 | 40 |
| 400 | 5 | 8 | 5 | 8 | $a_{j,k}=5$ | 8 | 50 |
| 500 | 6 | 9 | 6 | 9 | 6 | 9 | 60 |
| 800 | 7 | 10 | 7 | 10 | 7 | 10 | 70 |
| 1500 | 8 | 5 | 8 | 5 | 8 | 5 | 80 |
| 2000 | 9 | 4 | 9 | 4 | 9 | 4 | 90 |
| 3000 | 10 | 3 | 10 | 3 | 10 | 3 | 100 |

Fall 4: Neben $a_{j,k}$ sind in Abbildung 7 auch die Elemente $a_{j,k-1}$, $a_{j-1,k}$ und $a_{j-1,k-1}$ an der Interpolation beteiligt → $a_{j,k}= d$

Abbildung 7: Schematische Darstellung Fall 4

| y\x | 20 | 50 | 60 | 70 | 90 | 100 | 150 |
|---|---|---|---|---|---|---|---|
| 100 | 2 | 5 | 2 | 5 | 2 | 5 | 20 |
| 200 | 3 | 6 | 3 | 6 | 3 | 6 | 30 |
| 300 | 4 | 7 | 4 | 7 | 4 | 7 | 40 |
| 400 | 5 | 8 | 5 | 8 | $a_{j,k}=5$ | 8 | 50 |
| 500 | 6 | 9 | 6 | 9 | 6 | 9 | 60 |
| 800 | 7 | 10 | 7 | 10 | 7 | 10 | 70 |
| 1500 | 8 | 5 | 8 | 5 | 8 | 5 | 80 |
| 2000 | 9 | 4 | 9 | 4 | 9 | 4 | 90 |
| 3000 | 10 | 3 | 10 | 3 | 10 | 3 | 100 |

Trifft keiner dieser Fälle zu, so ist $a_{j,k}$ weder a, b, c noch d und nicht an dem aktuellen Lernvorgang beteiligt.

Gleichungen zur Adaption der Ausgangsmatrix

Die Gleichungen zur Bestimmung der Gewichtungsfaktoren *ga, gb, gc* und *gd* werden als allgemein bekannt angenommen und nicht separat aufgeführt.

Der "alte" Ausgangswert wird aus den einzelnen "alten" Ausgangsmatrixelementen *a, b, c* und *d* mit den Gewichtungsfaktoren *ga, gb, gc* und *gd* wie folgt bestimmt (lineare Interpolation):

$$Z = a \times ga + b \times gb + c \times gc + d \times gd \qquad (6.1)$$

Der "neue" Ausgangswert $\dot{Z}$ wird aus den einzelnen "neuen" Ausgangsmatrixelementen $\dot{a}$, $\dot{b}$, $\dot{c}$ und $\dot{d}$ mit den Gewichtungsfaktoren *ga, gb, gc* und *gd* wie folgt bestimmt (lineare Interpolation):

$$\dot{Z} = \dot{a} \times ga + \dot{b} \times gb + \dot{c} \times gc + \dot{d} \times gd \qquad (6.2)$$

Die "neuen" Werte der Ausgangsmatrixelemente werden dabei wie folgt ermittelt:

$$\dot{a} = a + \Delta a \qquad (6.3)$$

$$\dot{b} = b + \Delta b \qquad (6.4)$$

$$\dot{c} = c + \Delta c \qquad (6.5)$$

$$\dot{d} = d + \Delta d \qquad (6.6)$$

wird als die Summe der durchgeführten Veränderung zu den alten Werten definiert:

$$\Delta G = \Delta a + \Delta b + \Delta c + \Delta d \qquad (6.7)$$

Die Absicht, die Größe der Veränderung der Werte an den Ausgangsmatrixelementen in Abhängigkeit der Höhe der Gewichtung für die Interpolation vorzunehmen, wird in den folgenden Gleichungen beschrieben:

$$\Delta a = ga \times \Delta G \qquad (6.8)$$

$$\Delta a = ga \times \Delta G \qquad (6.8)$$

$$\Delta b = gb \times \Delta G \qquad (6.9)$$

$$\Delta c = gc \times \Delta G \qquad (6.10)$$

$$\Delta d = gd \times \Delta G \qquad (6.11)$$

Die Differenz des Ausgangswertes $\Delta Z = \dot{Z} - Z$ kann auch mit folgender Gleichung beschrieben werden.

$$\Delta Z = ga \times \Delta a + gb \times \Delta b + gc \times \Delta c + gd \times \Delta d \qquad (6.12)$$

Durch Einsetzen der Gleichungen (6.8) bis (6.11) in Gleichung (6.12) erhält man schließlich:

$$\Delta G = \frac{\Delta Z}{(ga)^2 + (gb)^2 + (gc)^2 + (gd)^2} \qquad (6.13)$$

Damit lassen sich nun $\Delta a, \Delta b, \Delta c$ und $\Delta d$ schließlich auch $\grave{a}$, $\grave{b}$, $\grave{c}$ und $\grave{d}$ bestimmen.

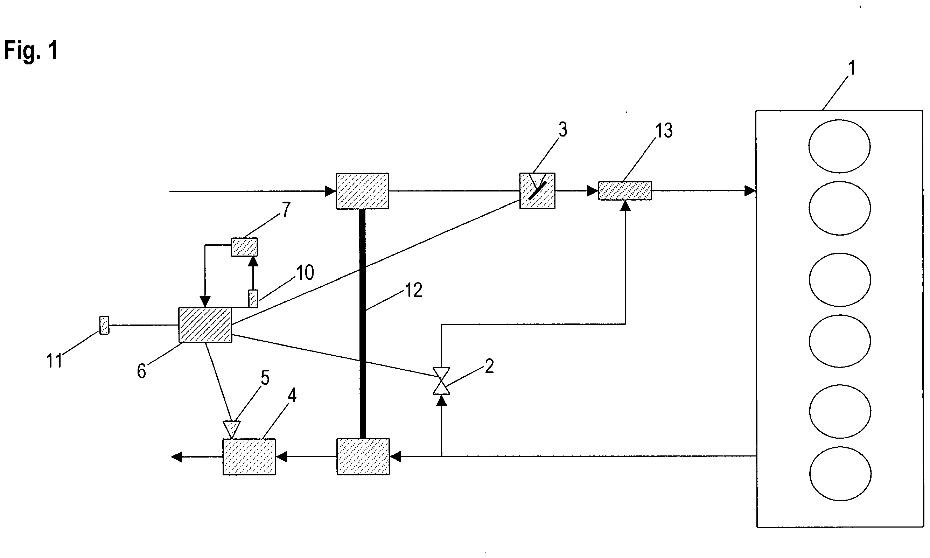

In Figur 1 wird ein Verbrennungsmotor 1 dargestellt, der ein AGR-Ventil 2 aufweist, das zwischen dem Ansaugtrakt und dem Abgastrakt des Verbrennungsmotors 1 angeordnet ist. Weiter weist der Verbrennungsmotor 1 eine Drosselklappe 3 im Ansaugtrakt auf.

Im Abgastrakt des Verbrennungsmotors 1 befindet sich ein Auspuff bzw. Partikelfilter und/oder ein Katalysator. Im Abgastrakt, insbesondere im Bereich des Partikelfilters, befindet sich ein NOx-Sensor 5. Eine Regelvorrichtung 6 kommuniziert mit dem AGR-Ventil 2, der Drosselklappe 3, dem NOx-Sensor 5 und dem physikalisches Modell 7 sowie dem Korrekturmodul 10 und der Datenschnittstelle 11.

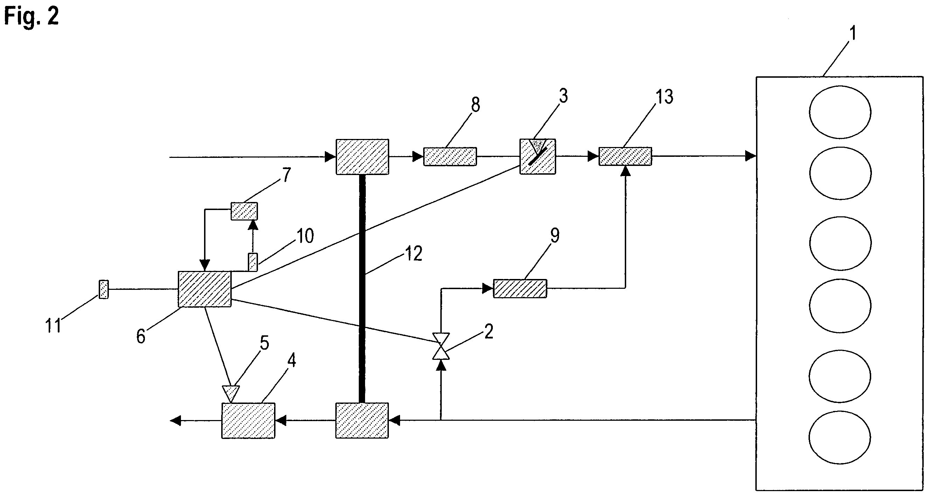

Figur 2 zeigt einen Verbrennungsmotor 1 mit Ladeluftkühler 8, AGR-Kühler 9 und einem Turbolader 12. Der Verbrennungsmotor 1 weist ein AGR-Ventil 2 auf, das zwischen dem Ansauggtrakt und dem Abgastrakt des Verbrennungsmotors 1 angeordnet ist. Weiter weist der Verbrennungsmotor 1 eine Drosselklappe 3 im Ansaugtrakt auf.

Im Abgastrakt des Verbrennungsmotors 1 befindet sich ein Auspuff bzw. Partikelfilter und/oder ein Katalysator. Im Abgastrakt, insbesondere im Bereich des Partikelfilters befindet sich ein NOx-Sensor 5. Eine Regelvorrichtung 6 kommuniziert mit dem AGR-Ventil 2, der Drosselklappe 3, dem NOx-Sensor 5 und dem physikalisches Modell 7 sowie dem Korrekturmodul 10 und der Datenschnittstelle 11.

Formelzeichen

| | |
|---|---|
| $a_{j,k}$ | Element j,k der Ausgangsmatrix |
| $a$ | Betriebspunkteinhüllendes Element a aus der Ausgangsmatrix |
| $b$ | Betriebspunkteinhüllendes Element b aus der Ausgangsmatrix |
| $c$ | Betriebspunkteinhüllendes Element c aus der Ausgangsmatrix |
| $d$ | Betriebspunkteinhüllendes Element d aus der Ausgangsmatrix |
| $\grave{a}$ | Folgewert für Betriebspunkteinhüllendes Element a aus der Ausgangsmatrix |
| $\grave{b}$ | Folgewert für Betriebspunkteinhüllendes Element b aus der Ausgangsmatrix |
| $\grave{c}$ | Folgewert für Betriebspunkteinhüllendes Element b aus der Ausgangsmatrix |
| $\grave{d}$ | Folgewert für Betriebspunkteinhüllendes Element d aus der Ausgangsmatrix |
| $\Delta a$ | Differenz aus Folgewert und Aktuellem Wert für Betriebspunkteinhüllendes Element a aus der Ausgangsmatrix |
| $\Delta b$ | Differenz aus Folgewert und Aktuellem Wert für Betriebspunkteinhüllendes Element b aus der Ausgangsmatrix |
| $\Delta c$ | Differenz aus Folgewert und Aktuellem Wert für Betriebspunkteinhüllendes Element c aus der Ausgangsmatrix |
| $\Delta d$ | Differenz aus Folgewert und Aktuellem Wert für Betriebspunkteinhüllendes Element d aus der Ausgangsmatrix |
| $ga$ | Gewichtfaktor für Element a |
| $gb$ | Gewichtfaktor für Element b |
| $gc$ | Gewichtfaktor für Element c |
| $gd$ | Gewichtfaktor für Element d |
| $\Delta G$ | Summe aus $\Delta a$, $\Delta b$, $\Delta c$ und $\Delta d$ |

(fortgesetzt)

| $x$ | Eingangsvariable für $\bar{x}$ |
|---|---|
| $y$ | Eingangsvariable für $\bar{y}$ |
| $\bar{x}$ | x-Achse |
| $\bar{y}$ | y-Achse |
| $\bar{z}$ | Matrix für Ausgangswerte (Ausgangsmatrix) |
| $Z$ | Interpolierter Wert aus Ausgangsmatrix |
| $\hat{Z}$ | Interpolierter Wert aus Folgeelementen der Ausgangsmatrix |
| $\Delta Z$ | Differenz aus $\hat{Z}$ und $Z$ |

Bezugszeichenliste

1 Verbrennungsmotor
2 AGR-Ventil
3 Drosselklappe
4 Auspuff bzw. Partikelfilter oder Katalysator
5 NOx-Sensor
6 Regelvorrichtung
7 physikalisches Modell
8 Ladeluftkühler
9 AGR-Kühler
10 Korrekturmodul
11 Datenschnittstelle
12 Turbolader

**Patentansprüche**

1. Verfahren zur Abgasrückführung (AGR), insbesondere an Verbrennungsmotoren, zur Reduzierung der Nox-Emission, indem ein AGR-Ventil (2) und/oder eine Drosselklappe (3) angesteuert wird, bei dem während einer bestimmten Zeitspanne nach Ermittlung eines NOx-Wertes für die Ermittlung der Werte für die Ansteuerung des AGR-Ventils (2) und/oder der Drosselklappe (3) ein mathematisches Modell herangezogen wird, in das die aktuell ermittelten NOx-Werte, die seit dem Abschluss der NOx-Mesung vergangene Zeitspanne und die für die NOx-Reduzierung relevanten Parameter des Verbrennungsmotors (1) eingehen, wobei die NOx-Emission im transienten Betrieb mittels eines mathematischen Zusammenhangs aus verschiedenen Größen geschätzt wird, **dadurch gekennzeichnet, dass** der aktuelle Zustand des NOx-Gehalts bzw. der aktuelle NOx-Anteil im Abgas anhand eines physikalischen Modells (7) des Verbrennungsmotors (1) ermittelt und gespeichert wird, wobei das physikalische Modell (7) parallel zum mathematischen Modell betrieben wird und dass die Regelvorrichtung (6) in Abhängigkeit des Betriebszustands des Verbrennungsmotors die niedrigste NOx-Vorhersage des mathematischen oder des physikalischen Modells auswählt und in entsprechende Steuersignale insbesondere für das AGR-Ventil 2 und die Drosselklappe 3 umsetzt.

2. Verfahren nach Anspruch 1, **dadurch gekennzeichnet, dass** die bestimmte Zeitspanne die Zeit ist, die nach dem Abschluss einer vorhergehenden NOx-Messung vergeht, bevor der Regelungsvorgang umgesetzt ist.

3. Verfahren nach Anspruch 1 oder 2, **dadurch gekennzeichnet, dass** die Zeitspanne als t = totzeit + 5 * Verzögerungszeit definiert wird.

4. Verfahren nach Anspruch 3, **dadurch gekennzeichnet, dass** im Wesentlichen alle verfügbaren motorspe-zifischen Messwerte im physikalischen Modell (4) in Abhängigkeit aller zur Verfügung stehender Betriebsparameter erfasst und gespeichert werden.

**5.** Verfahren nach einem oder mehreren der vorgenannten Ansprüche, **dadurch gekennzeichnet, dass** die Regelvorrichtung (6) ständig in Abhän-gigkeit des Betriebszustands des Verbrennungsmotors das mathematische mit dem physikalischen Modell vergleicht.

**6.** Verfahren nach einem oder mehreren der vorgenannten Ansprüche, **dadurch gekennzeichnet, dass** die Regelvorrichtung (6) ständig in Abhän-gigkeit des Betriebszustands des Verbrennungsmotors die NOx-Vorher-sage des mathematischen oder des physikalischen Modells vergleicht und/ oder speichert.

**7.** Verfahren nach einem oder mehreren der vorgenannten Ansprüche, **dadurch gekennzeichnet, dass** mittels einer Datenschnittstelle (11) Daten des physikalischen Modells mit einem externen Expertensystem ausge-tauscht werden können.

**8.** Brennkraftmaschine, umfassend wenigstens einen Abgas- und wenigstens einen Ansaugtrakt, wenigstens ein AGR-Ventil (2) und/oder eine Drosselklappe (3), wenigstens einen Auspuff (4), wenigstens einen NOx-Sensor (5) und wenigstens eine Regelvorrichtung (6) welche alle Schritte des Verfahrens gemäß Anspruch 1 durchführt.

**Claims**

**1.** Method for exhaust gas recirculation (EGR), in particular on internal combustion engines, for reducing NOx emissions, by actuating an EGR valve (2) and/or a throttle flap (3), in which during a predetermined period of time after determination of an NOx value for the determination of the values for actuating the EGR valve (2) and/or the throttle flap (3) a mathematical model is employed, in which the currently determined NOx values, the period of time that has elapsed since the completion of the NOx measurement, and those parameters of the internal combustion engine (1) which are relevant for NOx reduction are included, wherein the NOx emissions in transient operation are estimated from various variables by means of a mathematical relationship, **characterized in that**, the current state of the NOx content or the current NOx fraction in the exhaust gas is determined and stored by means of a physical model (7) of the internal combustion engine (1), wherein the physical model (7) is operated in parallel with the mathematical model and **in that**, depending on the operating state of the internal combustion engine, the control device (6) selects the lowest NOx prediction from the mathematical model or the physical model and converts it into corresponding control signals, in particular control signals for the EGR valve 2 and the throttle flap 3.

**2.** Method according to Claim 1, **characterized in that** the predetermined period of time is the time which elapses after the completion of a preceding NOx measurement before the control process is implemented.

**3.** Method according to Claim 1 or 2, **characterized in that** the period of time is defined as t = dead time + 5 * delay time.

**4.** Method according to Claim 3, **characterized in that** essentially all the available engine-specific measured values are recorded and stored in the physical model (4) as a function of all the available operating parameters.

**5.** Method according to one or more of the preceding claims, **characterized in that** the control device (6) continuously compares the mathematical model with the physical model, depending on the operating state of the internal combustion engine.

**6.** Method according to one or more of the preceding claims, **characterized in that** the control device (6) continuously compares and/or stores the NOx prediction of the mathematical model or of the physical model, depending on the operating state of the internal combustion engine.

**7.** Method according to one or more of the preceding claims, **characterized in that** data from the physical model can be exchanged with an external expert system by means of a data interface (11).

**8.** Internal combustion engine comprising at least one exhaust gas section and at least one intake section, at least one EGR valve (2) and/or one throttle flap (3), at least one exhaust (4), at least one NOx sensor (5) and at least one control device (6) which carries out all steps of the method according to Claim 1.

**Revendications**

1. Procédé de recyclage de gaz d'échappement (RGE), en particulier dans des moteurs à combustion interne, pour la réduction des émissions de NOx, dans lequel une soupape RGE (2) et/ou un clapet d'étranglement (3) sont pilotés, dans lequel, pendant un intervalle de temps déterminé après la détermination d'une valeur de NOx on utilise pour la détermination des valeurs pour la commande pilote de la soupape RGE (2) et/ou du clapet d'étranglement (3) un modèle mathématique dans lequel interviennent les valeurs de NOx actuellement déterminées, l'intervalle de temps écoulé depuis la fin de la mesure des NOx et les paramètres du moteur à combustion interne (1) pertinents pour la réduction des NOx, l'émission de NOx en mode transitoire étant évaluée au moyen d'une relation mathématique entre différentes grandeurs, **caractérisé en ce que** l'état actuel de la teneur en NOx ou la proportion actuelle des NOx dans le gaz d'échappement sont déterminés et mémorisés à l'aide d'un modèle physique (7) du moteur à combustion interne (1), le modèle physique (7) étant exploité en parallèle avec le modèle mathématique et **en ce que** le dispositif de réglage (6) sélectionne, en fonction de l'état de fonctionnement du moteur à combustion interne, la prédiction la plus basse pour les NOx du modèle mathématique ou du modèle physique et la convertit en signaux de commande correspondants, en particulier pour la soupape RGE (2) et le clapet d'étranglement (3).

2. Procédé selon la revendication 1, **caractérisé en ce que** l'intervalle de temps déterminé est le temps écoulé après la fin d'une mesure de NOx précédente avant d'effectuer l'opération de régulation.

3. Procédé selon la revendication 1 ou 2, **caractérisé en ce que** l'intervalle de temps est défini par t = temps total + 5 * temps de retard.

4. Procédé selon la revendication 3, **caractérisé en ce qu'**essentiellement toutes les valeurs de mesure disponibles spécifiques au moteur sont détectées dans le modèle physique (4) en fonction de tous les paramètres de fonctionnement disponibles et sont mémorisées.

5. Procédé selon l'une quelconque ou plusieurs des revendications précédentes, **caractérisé en ce que** le dispositif de régulation (6) compare de manière continue le modèle mathématique avec le modèle physique en fonction de l'état de fonctionnement du moteur à combustion interne.

6. Procédé selon l'une quelconque ou plusieurs des revendications précédentes, **caractérisé en ce que** le dispositif de régulation (6) compare et/ou mémorise de manière continue la prédiction du modèle mathématique ou du modèle physique en rapport avec les NOx en fonction de l'état de fonctionnement du moteur à combustion interne.

7. Procédé selon l'une quelconque ou plusieurs des revendications précédentes, **caractérisé en ce qu'**au moyen d'une interface de données (11), des données du modèle physique peuvent être échangées avec un système expert externe.

8. Moteur à combustion interne, comprenant au moins une ligne d'échappement et au moins une ligne d'admission, au moins une soupape RGE (2) et/ou un clapet d'étranglement (3), au moins un tuyau d'échappement (4), au moins un capteur de NOx (5) et au moins un dispositif de régulation (6) qui met en oeuvre toutes les étapes du procédé selon la revendication 1.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008131789 A1

- DE 10000339 A1

**In der Beschreibung aufgeführte Nicht-Patentliteratur**

- Lexikon Motortechnik. April 2004, 14ff